# EUROPÄISCHE PATENTANMELDUNG

(11) **EP 1 627 860 A2**
(43) Veröffentlichungstag der Anmeldung: **22.02.2006**
(21) Anmeldenummer: 05107570.3
(22) Anmeldetag: 17.08.2005
(51) Int. Cl.: C04B 28/24

(54) **Rutschhemmende Strukturbeschichtung unter Verwendung von pyrogener Kieselsäure**

(30) Priorität: 18.08.2004 AT 13882004; 19.07.2005 AT 12122005; 26.07.2005 AT 12522005
(71) Anmelder: Wagner, Friedrich, 2353 Guntramsdorf (AT)
(72) Erfinder: Wagner, Friedrich, 2353 Guntramsdorf (AT)
(74) Vertreter: Fleuchaus, Michael A.

(57) **Zusammenfassung**

Zusammensetzung zum Aufbringen einer rutschhemmenden Beschichtung auf glatten Flächen, bestehend aus einem Bindemittel und Granulat und einem Zusatz von durch Flammenhydrolyse von Chlorsilanen hergestellter, extrem feinteiliger, synthetischer Kieselsäuren in Pulverform. Die auf diese Weise erhaltenen "pyrogenen" Produkte sind röntgenamorph, hydrophil und haben mittlere Primärteilchengröße von 7 - 40 nm. Die für die Strukturierung der Rutschhemmung maßgeblichen Zusätze der erfindungsgemäßen Zusammensetzung sind aus den hydrophilen oder hydrophoben Gruppierungen der synthetischen Kieselsäuren. Für die lösungsmittelgebundenen Beschichtungen kommen synthetische Kieselsäuren der hydrophoben Gruppe zum Einsatz. Für Beschichtungen auf wässeriger Basis die synthetischen Kieselsäuren der hydrophilen Art.

## Beschreibung

Die Erfindung betrifft Materialien, die zum Auftrag auf Oberflächen geeignet sind und unter Verwendung von Kieselsäure rutschhemmende Strukturen ausbauen. Durch ihre Beimischung in Produktionsmittel ist es auf diese Weise auch möglich rutschhemmende Deckschichten z.B. auf Bodenbeläge oder Gebrauchsgegenstände aufzubringen.

Die ganze Welt ist rutschig. Es gibt viele Bemühungen die sich daraus entwickelnden Gefahren zu vermeiden oder zu verringern. Der dabei wahrscheinlich meist verwendete Weg ist, auf rutschige Flächen, mittels in Bindemittel eingerührte Additive und Granulate rutschhemmende Mischungen aufzutragen. Dies geschieht manuell und im Spritzverfahren in relativ dünner Weise, da sich Rutschhemmung nur ausbilden kann, wenn die Bindemittel sich dünner ausebnen als die Granulate groß sind. Die Rutschhemmung ist hierbei beschränkt und gründliche Reinigung kann schwierig sein, denn größere wie auch kleine Granulate in dünnem Belag ergeben keine guten Abriebwerte, reißen leicht aus der Verankerung und sind schwerer zu reinigen.

In der europäischen Patentschrift DE 697 027 69 T2 gibt Boogard Beeher B.V. einen Überblick über die weltweiten Patente betreffend Rutschhemmung, beschreibt deren Nachteile und bietet eine weitere Lösungsmöglichkeit an. Boogard gibt dabei eine sehr umfassende, komplexe und akribische Zusammenstellung fast aller möglichen Bindemittel, dazugehöriger Additive und Granulate verschiedenen Aufbaus. Jedoch geht es bei den bekannten Zusammensetzungen zur Rutschhemmung immer nur um den einen Zweck, ein Bindemittel, versehen mit den nötigen Additiven und Granulaten, in der Größe von wenigen bis zu 800µ, oder auch mehr, in unterschiedlichen Gewichtsprozenten mittels Hilfsmitteln oder auch im Spritzverfahren auf entsprechende Oberflächen aufzubringen. Bei allen angeführten Beschichtungen von Boogard kann sich Rutschhemmung nur ausbilden, wenn die Bindemittel sich dünner ausebnen - und alle ebnen sich aus - als die Granulate groß sind.

Es kann bei Boogard somit von sogenannten Strukturen nur in der Ebene gesprochen werden, da den Bindemitteln mit den Granulaten jede Vorraussetzung fehlt Strukturen in die Höhe gehend aufzubauen. Bei dünnem Bindemittel verlieren die Granulate an Haltmöglichkeit, bei zu starkem Auftrag versinken die Granulate und die Rutschhemmung hebt sich auf.

Es ist daher Aufgabe der Erfindung eine Zusammensetzung bereitzustellen, die in ihrer Verwendung die Nachteile der Kombination Bindemittel/Granulate ausschließt. Für die Erfindung werden 1- oder 2- komponentige wässerige oder lösungsmittelgebundene Verbindungen (Bindemittel, Lacke, Dispersionen, Lasuren) verwendet, bei denen die Rutschhemmung nur über das Einmischen von Primärteilchen im Nanobereich aufgebaut wird. Unter "Primärteilchen im Nanobereich" sind entsprechend vorliegender Erfindung feine pyrogene Kieselsäureteilchen in Größenbereichen von 2-10 nm, 5-25 nm, 12-30 nm, 20-35 nm, 30-45 nm und/oder 50-60 nm zu verstehen.

Die Herstellung derartiger feiner pyrogener Kieselsäure beruht dabei auf dem in den Jahren nach 1940 entwickelten Verfahren der Flammenhydrolyse von Chlorsilanen, wodurch Siliciumdioxid (chemische Formel SiO2) gewonnen wurde. Die auf diese Weise erhaltenen extrem feinteiligen, pyrogenen, synthetischen Kieselsäuren in Pulverform sind röntgenamorph, hydrophil und haben mittlere Teilchengröße von 7 - 40 nm. Zunächst sind derart erzeugte und nicht nachbehandelten synthetischen Kieselsäuren durch die an der Oberfläche befindlichen Silanolgruppen hydrophil. Diese Silanolgruppen lassen sich in einem kontinuierlichen Verfahren mit Dimethyldichlorsilan chemisch umsetzen. Das entstehende Produkt bindet Methylgruppen, wodurch das Siliciumdioxid hydrophob wird und durch weitere chemische Zusätze andere spezifische Eigenschaften erwirbt, die zu einer Reihe von Anwendungsmöglichkeiten der hydrophoben Produkte mit diversen Bindemitteln führt. Die ursprünglich von Degussa in der Flammenhydrolyse aus Chlorsilanen erzeugte syntetische Kieselsäure sowie die Weiterentwicklung zu pyrogene, röntgenamorphe, hydrophobe synthetische Kieselsäure (hydrophile und hydrophobe Produkte) werden im Nachfolgenden einheitlich als synthetische Kieselsäuren bzw. mit dem Produktnamen Aerosil bezeichnet.

Aus den zahlreichen synthetischen Kieselsäuren kann der Fachmann durch einfache Versuche ermitteln, welche sich für die erfindungsgemäße Verwendung mit einem gewünschten Bindemittel am besten eignen und in der angestrebten Form interagiert.

Um eine rutschhemmende Beschichtung bereitzustellen präsentiert die Erfindung die Verwendung von synthetischer Kieselsäure als Zusatz zu einem Bindemittel. Grundsätzlich ist der Zusatz von Kieselsäure zu Bindemitteln bekannt, da diese Verdickungseigenschaften haben oder das Absetzverhalten von zugemischten Produkten verbessern. In der Vorliegenden Erfindung geht es aber nicht um die Ausnutzung bereitsbekannter Effekte, sondern um den Zusatz von Kieselsäure zu Bindemitteln mit dem Ziel beim Auftragen des Bindemittels sich in die Höhe ausbildende Strukturen zu erzeugen, die sich rutschhemmend auf glatten Flächen auswirken. Die sich in die Höhe ausbildenden Strukturen sind dabei ein vielfaches höher als die mittlere Teilchgröße der zugesetzten Kieselsäure.

Das Hauptproblem bei der Einmischung von Kieselsäure in diverse Bindemittel ist dabei, dass die Kieselsäure das Bindemittel zu stark eindickt und damit ein gleichmäßiger Auftrag bzw. das Aufsprühen der Mischung nicht mehr möglich ist. Gleichzeitig ist bei zu geringen Mengen an zugesetzter Kieselsäure die Rutschhemmung nicht optimal.

Es war daher eine Aufgabe der Erfindung Mischungsverfahren zwischen Bindemitteln mit Kieselsäure unter Verwendung von geeigneten Verdünnern bereitzustellen, um zu gewährleisten dass ausreichend Kieselsäure in das Bindemittel eingearbeitet werden kann.

Geeignete Bindemittel im Rahmen der ERfindung sind zum Beispiel, aber nicht beschränkend, Bis-Phenol A, Epicote 828 XA, Härter aliph. Amin Epi Cure F205, 1-komp. wässriges Acryl-PU Acronal 620 (BASF) iVmAcronal LR 8977 und Laropal LR 8991, 2-komp. wässriges Epoxy Araldite GY 776 BD Klarlack (Vantico), Härter Aradur 39BD, 2-K lösungsmittelgebundene Acryl-PU Lack (Handelsname "Metallux" von Dunalakk, Budapest), Härter aliph. Isocyanat sowie 1-komp. Urethan Dispersionslack als wässrige oder lösungsmittelgebunde Zusammensetzung (Handelsname für eine wässrige Zusammensetzung "Neptun" von Tovilag Kft., Ungarn).

Entsprechend der vorliegenden Erfindung werden bei wässerigen 1- oder 2- komponentigen Bindemitteln die durch Flammenhydrolyse gewonnene, hydrophile, röntgenamorphe synthetische Kieselsäure (Siliciumdioxid, chem. Formel SiO2), vorzugsweise Aerosil in den Qualitäten 300 und 200, eingesetzt.

Gemäß anderer Ausführungsformen werden für lösungsmittelgebundene Bindemittel beispielsweise Produkte der hydrophoben Art in den folgenden aufgeführten Qualitäten eingesetzt:
- Silan, Trimethoxyoctyl - Hydrolyseprodukt mit Siliciumdioxid. Aerosil R 805.
- Reaktionsprodukt aus Siliciumdioxid und Hexadecyltrimethoxysilan. Aerosil R 816
- Silanamin, 1, 1, 1-Trimethyl-N-(Trimethylsilyl)-Hydrolyseprodukt mit Siliciumdioxid. Aerosil R 812.
- 2-Propensäure, 2-Methyl - , 3-(Trimethoxysilyl)propylester, Reaktionsprodukt mit Siliciumdioxid. Aerosil R 711.
- Silan, Dichlordimethyl-, Reaktionsprodukt mit Siliciumdioxid. Aerosil R 974.
- Silan, Dichlordimethyl-, Reaktionsprodukt mit Siliciumdioxid. Aerosil R 972

Erfindungsgemäß sind die für die Strukturierung der Rutschhemmung maßgeblichen Additive die synthetische Kieselsäuren aus den hydrophoben und hydrophilen Gruppierungen. Die Rutschhemmung ist für wasserlösliche und lösungsmittelhaltige Verbindungen in gleicher Weise gegeben. Gemäß einer bevorzugten Ausführungsform kommen z.B. R 805 und R 812 als Zusatz zu lösungsmittelgebundenen Beschichtungen zum Einsatz. Gemäß einer andereren bevorzugten Ausführungsform werden für Beschichtungen auf wässeriger Basis Siliciumdioxid als pyrogene, synthetische Kieselsäure vorzugsweise die hydrophilen Aerosile der Qualitäten 300 und 200 eingesetzt.

Die erfindungsgemäße Umsetzung der Rutschhemmung kann je nach zur Verwendung kommender Basis und gewähltem Arbeitsvorgang zu gewollt sichtbaren Strukturen führen, muß aber nicht. Durch die Eigenart und Winzigkeit der synthetischen Kieselsäure /Nanoteilchen ergibt sich, bei entsprechender Dosierung, immer eine sich in die Höhe aufbauende, rutschhemmende Struktur, die durch die Art des Auftrags und durch Rollen gefördert wird. Auch wenn die Beschichtung relativ dünnflüssig aufgebracht wird und sich nach leichtem Rollen ausebnet, sind, wenn nicht mit freiem Auge, bei Vergrößerung, Strukturen zu erkennen. Dünnflüssiges Beschichtungsmaterial kann auch durch Spritzen aufgebracht werden. Nach dem Abtrocknen, ergibt sich bei den dünnflüssig aufgetragenen transparenten Beschichtungen eine leicht matte, samtig-seidige, ebene Oberfläche die, so wie bei Ausführung mit sichtbaren Strukturen, rutschhemmende Höchstwerte erzielt. Die Oberfläche ist in den meisten Fällen pflegeleicht und kann hygienisch sauber gehalten werden.

Die erfindungsgemäße Verwendung der synthetischen Kieselsäure für Nanobeschichtung ist in den meisten Bezugsmaterialien wie Bindemittel, pigmentierten Lacken, Dispersionen, Lasuren, misch- und anwendbar. Sofern das Bezugsmaterial nicht mit Wasser verdünnbar ist, so jedenfalls mit den für die Bezugsmaterialien typischen Verdünnern, die in den meisten Fällen auf aliphatischen oder aromatischen Verbindungen basieren. Die erfindungsgemäße Nanobeschichtung kann auf die verschiedensten Oberflächen, auch biegsame, insbesondere auf Holz oder Gewebe, Glas, Metall und/oder Polyester aufgetragen werden. Bei Bedarf kann eine Zwischenschicht oder Grundierung verwendet werden.

Gemäß weiterer Ausführungsformen kann die sich in die Höhe aufbauende Struktur sichtbar oder für das bloße Auge unsichtbar sein. Hierfür werden je nach Verdünnung des Ansatzes und der gewichtmäßigen Beigabe von synthetischen Kieselsäure-Nanoteilchen relativ dünne bis stark cremige Mischungen zu bereitet. Ab einem gewissen Level können schon geringe weitere synth. Kieselsäure Nanobeigaben Strukturen schaffen, die außer für Sonderanwendungen nicht mehr praktikabel sind. Ein Maß nach oben sollte immer die mögliche hygienische Reinigung sein.

Die günstigste Dosierung an hydrophoben oder hydrophilen synth. Kieselsäuren ist bei den verschiedenen Basismaterialien, ob wasser- oder lösungmittelgebunden, je nach den gewünschten Ergebnissen anzusetzen und kann nur durch Versuche festgelegt werden. Dies gilt auch für die Art der zu verwendenden synth. Kieselsäure. Die wirkungsvolle Beigabe von synthetischen Kieselsäureteilchen im Nanobereich reicht von ca. 1 bis zu mehr als 30 %. Vorzugsweise werden 2-10%, 3,5-7%, 5-15%, 10-25% oder 15-30% oder auch 20- über 30% zugesetzt. Je nach Anforderung kann also mit den gleichen Mitteln auch die Qualität der Rutschhemmung variabel gestaltet werden.

Das Ansetzen von Mischungen mit hohem Anteil an synth. Kieselsäurepulver ist schwieriger, denn im Normfall kann vielen Basismaterialien nur eine geringe Dosis an synth. Kieselsäurepulver zugesetzt werden, ohne dass das Ausgangsmaterial zu dickflüssig wird und damit nicht mehr zum Auftrag auf Flächen geeignet ist. Erfindungsgemäß werden die synth. Kieselsäuren somit in und mit entsprechenden Verdünnern aufbereitet bevor sie den Bindemittel zugesetzt werden. Dies geschieht bei 1 oder 2-komponentigen (1-K oder 2-K) Mischungen mit hydrophoben oder hydrophilen synth. Kieselsäuren in unterschiedlicher Weise.

Bei 1-K Mischungen die sogleich einer Verarbeitung zugeführt werden, wird die Komponente mit dem entsprechenden, errechneten Verdünneranteil aufgefüllt und der für die gewünschte Struktur errechnete hydrophile oder hydrophobe synth. Kieselsäuregewichtsanteil wird eindispergiert. Dies setzt normalerweise eine Vorkalibrierung voraus, um die gewünschten Ergebnisse zu erreichen. Wird die Mischung nicht gleich verarbeitet, wird es vorteilhaft sein die synth. Kieselsäureanteile in den Verdünner zu dispergieren und als Dispersion zu lagern.

Bei 2-K Verbindungen wird bei sofortiger Verarbeitung die A-Komponente mit dem wässerigen oder lösungsmittelhaltigen Verdünner in vorbestimmter Menge aufgefüllt und mit dem berechneten Gewichtsanteil hydrophober oder hydrophiler synth. Kieselsäuren gründlichst dispergiert. Bei späterer Verwendung oder Lagerung ist es vorteilhaft, die synth. Kieselsäuren nur mit den entspechenden Verdünnern zu dispergieren und die Dispersion zu lagern. Nicht für alle Bindemittel und Mischungen sowie Verdünner können synth. Kieselsäuren in Dispersion gelagert werden. In diesen Fällen kann nur an Ort und Stelle gebrauchsfertig dispergiert und verarbeitet werden.

Es ist auch möglich wirksame, sehr gut rutschhemmende 1 oder 2- komponentige Mischungen in cremiger Form, ohne oder mit geringer Verdünnung, mit dem nötigen synth. Kieselsäurezusatz herzustellen. Alternative kann der Verdünneranteil je nach Basis und Anteil der synth. Kieselsäure und bei relativ dünnflüssigenen Anwendungsform des Beschichtungsmaterials auch in einem Basismaterial-zu-Verdünner Verhältnis von 1:1-3 angesetzt werden.

Eine rutschhemmende Verbindung mittels hydrophiler oder hydrophober synth. Kieselsäuren kann mit vielen Bindemitteln oder sonstigen Bezugsmaterialien hergestellt werden.

Während z.B. für die Ausbildung der Rutschhemmung bei Granulatzumischungen neben der Größe, und der Beschaffenheit auch die Dichte der Granulate auf die Bezugsfläche entscheidend ist und bei einer gegebenen Auftrittsfläche mit deutlich ausgebildeter, harter Granulatstruktur, z. B. bei Schuhen mit Leder- oder harter Kunststoffsohle, egal ob trockene oder nasse Oberfläche, trotzdem immer starke Rutschgefährdung gegeben ist, ist durch die Beschichtung einer solchen Auftrittsfläche mit synth. Kieselsäure-Nanobeschichtung, mit entsprechend angepasstem hohem synth. Kieselsäureanteil, für die gesamte Auftrittsfläche, bedingt durch die Winzigkeit der rutschhemmenden synth. Kieselsäureteilchen, die sich zu höhenaufbauenden Strukturen ausbildet, auch für Schuhe mit Leder- und harten Kunststoffsohlen, im trockenen oder nassen Zustand die nötige Rutschhemmung gegeben.

Die Frage der Wertigkeit der Rutschhemmung einer Beschichtung hängt dabei immer nur vom Grad der Beimischung an synth. Kieselsäure bzw. der Verdünnung ab. Entsprechend hängt der Grad der Rutschhemmung von der Abstimmung der Beschichtung ab. Diese Abstimmung und Wertigkeit der Beschichtung ist bei jedem Bindemittel, jeder Bezugs - mischung verschieden und kann auch noch innerhalb jeder Mischung in unterschiedlicher Weise stärker oder schwächer abgestimmt werden. Dies hängt jeweils vom prozentualen Anteil zwischen Verdünner zu synth. Kieselsäurepulver oder synth. Kieselsäuredispersion ab.

Die durch Flammenhyrolyse aus Chlorsilanen entwickelten, extrem feinteiligen Kieselsäuren in Pulverform sind als hydrophobe oder hydrophile Verbindung mit vielen möglichen Bindemitteln, nicht nur in der Lage alle rutschigen Oberflächen, bei Bedarf mit einer Zwischenschicht oder Grundierung, rutschhemmend zu beschichten, sie können auch direkt in Erzeugungsprozessen eingearbeitet werden. Die meisten synth. Kieselsäuren sind auch thermisch relativ hoch belastbar und können bei plastischen Kunststoffbelägen, Gummibe - lägen, Laminat- oder Holzböden - z.B. als Deckschicht eingearbeitet werden. Auch bei großflächigen Betonschutz Polyurea Sprüh- oder Spritzbeschichtungen können synth. Kieselsäuremischungen als Zusatz für Rutschhemmung im Mischkopf zugesetzt werden.

Ein weiterer Vorteil der Erfindung ist es, dass rutschhemmende Nanobeschichtungen, bedingt durch die Winzigkeit der wirksamen Zusätze dünner als Granulatbeschichtungen gehalten werden können. Dies kann bedeutende Ersparnisse an Bindemittel bringen.

Bei beiden Beschichtungen, sowohl Granulat als auch Nanobeschichtung sagt die Rutschhemmung jedoch noch wenig über Abrieb- und Kratzresistenz aus. Nanobeschichtungen in dünner Ausführung sind in Bezug auf Rutschhemmung entscheidend höher einzustufen als Granulatbeschichtungen.

Gemäß weiterer Ausführungsbeispiele wird eine Mischung aus synth. Kieselsäure und Nano-Aluminium-Oxid eingesetzt um die Kieselsäure-Nanobeschichtung abriebfester zu machen. So ergibt sich z.B. durch die Zumischung von synth. Kieselsäure und Nano-Aluminium-Oxid zu Methacrylsäuremethylester und anschließendem flächigen Vergiessen nach der Aushärtung eine rutschhemmende, abrieb- und kratzresistente Plexiglas-Oberfläche.

Durch den Zusatz an rutschhemmenden synth. Kieselsäuren verlieren ansonsten hochglän - zende transparente Oberflächen allerdings ihren Glanz, ihr Erscheinungsbild wirkt dann seidig-matt transparent. Nach Zusatz von Nano-Aluminium-Oxid in Pulver- oder Dispersionsform kann sich, je nach Bindemittel und Zusatzmenge, an den Oberflächen wieder Glanz ausbilden.

Da alle Acryl (Plexiglas) Badewannen rutschig und kratzempfindlich sind und sich allein in Österreich mehrere Firmen mit dem Renovieren verkratzter Acrylwannen und Duschtassen befassen, bietet die erfindungsgemäße Verwendung von synth. Kieselsäure eine Variante mit der Acrylwannen, Duschtassen und andere Objekte rutschhemmend, abriebs- und kratzresistent sowie pflegeleicht gefertigt werden können.

Gemäß weiterer Ausführungsformen lassen sich durch einem Zusatz von 0,5 - 15 % Gewichtsanteil Nano-Aluminium-Oxiden zum Festkörperanteil der Versuchsmischungen ausgezeichnete Werte an Abriebs- und Kratzresistenz erzielen.

In einfacher Formulierung kann gesagt werden, dass je höherwertiger die Bindemittel und Bezugsmischungen sind, um so höherwertiger wird bei Einsatz der pyrogenen, extrem feinteiligen, hydrophilen oder hydrophoben Kieselsäure in Pulverform oder in Dispersion und dem Einsatz von Nano-Aluminium-Oxid die daraus resultierende Rutschhemmung, sowie Abrieb- und Kratzresistenz.

Gemäß einer weiteren Ausführungsform betrifft die Erfindung daher die Verwendung einer sprühbaren Zusammensetzung mit synthetischer Kieselsäure. Gemäß einer weiteren Ausführungsform kann die erfindungsgemäße Mischung auf Schuhsohlen oder andere glatte Leder oder Kunststoffflächen aufgesprüht oder aufgestrichen werden.

Der Weg einer Sprühbehandlung ist insbesondere z.B. für beweglichen Bodenbelägen jeder Art und Größe und/oder z.B. Schuhsohlen geeignet. Vorzugsweise wird eine schnell trocknende, wässerige, ein- oder zweikomponentige geruchsarme, chemisch harmlose Verbindungen unter Zumischung von synthetischer Kieselsäure im Nanobereich, die elastisch aushärten und am Untergrund nicht ankleben, verwendet. Diese Verbindungen dürfen weiters die Beweglichkeit und Formbarkeit der Beläge nicht einschränken und müssen sie, sofern artgemäß erforderlich und möglich, diffusionsoffen halten.

Eine bevorzugte Verbindung in dieser Richtung ist eine wässrige Dispersion eines carboxyl - gruppenhaltigen Copolymeren aus 1,3-Butadien und Styrol. Diese Verbindung ist niedrigviskos und weist einen sehr niedrigen Eigengeruch auf. PH-Wert 7,3 - 8,3. Dieses Verbindung kann pur oder anteilig mit Wasser verwendet werden. Die Rutschhemmung wird mit pyrogenen, roentgenamorphen, hydrophilen, synthetischen Kieselsäuren in Nanoform aufgebaut. Beispielsweise mit Aerosil der Qualität 200 oder 300.

Der mögliche Anteil der synthetischen Kieselsäure reicht von 1 % bis cirka 20%. Der mittlere Anteil liegt bei 3 bis 10%, da die Mischung sich sehr fein versprühen lassen muß und die Düsen der Sprüheinrichtung nicht verkleben darf. Die Mischungen können dem beabsichtigten Verwendungszweck entsprechend jeweils mit ihrem Anteil an Bindemittel, Wasser und Gehalt an synthetischer Kieselsäure angepasst werden.

Die erfindungsgemäße Mischung ist insbesondere geeignet um auf Schuhsohlen oder andere glatte Leder oder Kunststoffflächen aufgesprüht oder aufgestrichen werden.

Gemäß weiterer Ausführungsformen können der erfindungsgemäßen rutschhemmenden Oberflächenbeschichtung auch kleine Granulate beigemischt werden.

Die Granulate sind vorzugsweise synthetischer oder organischer Natur. Es können z.B. Kugelpigmente aus aliphatischem Polyurethan, aromatischem Polyurethan/Polyurea Copolymer und/oder Polyacrylat eingesetzt werden. Granulate aus TPU-Elastomeren, granuliert aus Pellets der, zum Beispiel, Elastogran GmbH, BASF Gruppe mit Elastollan Typreihe S, bis 90 Shore, oder anderen Typreihen, sowie Gummigranulate sind ebenso geeignet. Gummigranulate und TPU - Elastomere sind sehr abriebfest, schall- und wärmedämmend, bei zwei bis dreimaligem Auftrag auch stark genug um von schweren Fahrzeugen befahren zu werden.

Entsprechend der vorliegenden Erfindung werden nur kleine Granulate mit einer durchschnittlichen Größe von weniger als 75 µm eingesetzt. Vorzugsweise werden der erfindungsgemäßen Zusammensetzung Granulate mit einer durchschnittlichen Größe von 5-30 µm, 15-45 µm, 30-60 µm und/oder 35-75 µm eingesetzt.

Für die erfindungsgemäße Zusammensetzung werden in die Bindemittel, je nach Art, hydrophobe oder hydrophile Aerosile oder andere synth. Kieselsäuren in einer Konzentration von z.B. 1 - über 30 Gew.%, vorzugsweise 2-10%, 3,5-7%, 5-15%, 10-25% oder 15-30% oder auch 20- über 30% eindispergiert, anschließend oder gleichzeitig mit den Aerosilen werden die Granulate beigemischt, diese haben z.B. eine mittlere Größe von 20 - 60µm. Die Granulate haben zum Bindemittel einen Gewichtsanteil von 10 - 50%, vorzugsweise 15 - 30%.

Nach gründlichem Durchmischen entsteht eine homogene, cremige Masse, die bei wasserlöslichen 1-Komponenten Mischungen ohne Topfzeit einsatzbereit ist oder auch abgefüllt werden kann und lagerbar ist. Bei 2-Komponenten, Lösungsmittel gebundenen Mischungen wird mit der Komponente "A" und dem Zusatz von Aerosil, z.B. Aerosil R 805 (Degussa), in gleicher Weise verfahren, wie oben angeführt. Die fertige homogene Masse ist etwas steifer angerührt, als es bei den wasserlöslichen 1 - Komponenten Mischungen der Fall ist. Die "A" Komponente kann ohne Topfzeit abgefüllt und gelagert werden. Die für die Verarbeitung gebrauchsfertige "A" Komponente erhält einen Härterzusatz von 2,5:1 bis 3,5:1. Topfzeit bis zu 4 Stunden.

Die praktische Anwendung des Auftrages geht für beide Ausführungen in gleicher Weise vor sich. Auf einer vorbereiteten Oberfläche wird die cremige homogene Masse, je nach dem gewünschten Endeffektmehr oder weniger dünn und gleichmäßig aufgetragen. Vorzugsweise erfolgt der Auftrag mit einer Kunststoff-Spachtel, vorzugsweise leicht gezahnt. Mit einer üblicherweise weißen Schaumstoffrolle wird die aufgetragene Beschichtung mit mäßigem Druck gerollt. Es kann in einer Richtung oder kreuz und quer gerollt werden, dadurch kann auf das Gesamtbild der Struktur Einfluss genommen werden. Es ergibt sich ein Teppich von gleichmäßigen Erhebungen und Tälern. Durch die Stärke der aufgetragenen Schicht, durch den Gewichtsanteil der beigefügten Kieselsäure und durch die Art des Rollens wird auch die Struktur der Erhebungen bestimmt. Sie können fein oder grob sein, etwas spitz, stumpf oder abgerundet zulaufen oder sich in der Höhe unterscheiden. Innerhalb der Struktur gibt es keine rauen Stellen, nur sanfte und glatte Übergänge und Kanäle. Auf alle Fälle bleibt durch die Wirkung des Kieselsäure die gerollte Struktur nach dem Rollen bestehen und härtet in dieser Form aus. Bei manchen Anwendungen kann die Verwendung von üblicherweise gelben Kunststoff-Strukturrollen gewünscht sein, dies gibt gröbere Strukturen.

### Ausführungsbeispiele

### I. Mischungsbeispiele

### 1. Mischungen mit 2-K lösungsmittelgebundenen Bindemitteln

| | |
|---|---|
| Komponente A ("A") Epoxy Epicote 828 XA | 25,00 Gr |
| Methoxypropylacetat MPA/ 70% | 17,50 |
| Dynasylan 4% | 1,00 |
| Entschäumer | 0,50 |
| Synth.Kieselsäure R805 /12% v."A" | 3,00 |
| Komponente B ("B") aliphatisches Amin, Härter 2,5 : 1 | 10,00 |

Sehr gut und leicht zu verarbeiten. Dünner Auftrag ergibt sehr feine Struktur mit sehr guter Rutschhemmung. Stark aufgetragen und gerollt ergeben sich raue,schroffe Strukturen für Sonderanwendungen.

### 2.

| | |
|---|---|
| "A" Epoxy Epicote 828 XA | 25,00 Gr |
| MPA / 20% | 5,00 |
| Dynasylan | 1,00 |
| Entschäumer | 0,50 |
| synth. Kieselsäure R805 / 9,6% v. "A" | 2,40 |
| "B" aliph. Amin, 2,5 : 1 | 10,00 |

sehr gut aufzutragen, sehr gut rutschhemmend. Gibt superfeine griffige und glänzende Fläche.

### 3.

| | |
|---|---|
| "A" Epoxy Epicote 828 XA | 25,00 Gr |
| MPA / 40% | 10,00 |
| Dynasylan 4% | 1,00 |
| Entschäumer | 0,50 |
| synth.Kieselsäure R805 / 12% v."A" | 3,00 |
| "B" aliph. Amin 2,5 : 1 | 10,00 |

sehr feine Struktur, sehr gut rutschhemmend, für große Flächen geeignet Alle diese Epoxybeschichtungen haben kurze Topfzeit, bei Raumtemp.von 20°ca. 8St.Trockenzeit.

### 4. "Rezakril", 2-K Acryl-Bindemittel

| | |
|---|---|
| Acryl "A" | 30,00 Gr. |
| MPA 80% | 24,00 |
| Synth.Kieselsäure R805 v."A" 15,3% | 4,60 |
| Dynasylan 4% | 1,20 |
| Entschäumer | 0,50 |
| "B" Isocyanat 3 : 1 | 10,00 |

sehr leicht und schön aufzutragen, schön zu rollen, feine Struktur. Sehr gut rutschhemmend, nass und trocken
barfuß und mit glatten Ledersohlen.

### 5.

| | |
|---|---|
| Acryl "A" | 30,00 Gr |
| MPA 80% | 24,00 |
| synth.Kieselsäure R805 zu "A" 17,5% | 5,30 |
| Dynasylan 4% | 1,20 |
| Entschäumer | 0,50 |
| "B" Isocyanat 3 : 1 | 10,00 |

Entweder sehr dünn auftragen, bei feiner, griffiger Struktur. Normaler und starker Auftrag ergibt extremstruktur, schwer zu reinigen (Dampfstrahler).

### 6.

| | |
|---|---|
| Acryl "A" | 30,00 Gr |
| MPA 100% | 30,00 |
| synth.K.säure R805 zu "A" 15% | 4,50 |
| Dynasylan 4% | 1,20 |
| Entschäumer | 0,50 |
| "B" Isocyanat | 10,00 |

Mit Grundierung. Sehr gut mischbar, sehr gut aufzutragen. Dünner Auftrag,sehr feine rutschhemmende Struktur. stärkerer Auftrag macht griffig und rau.

### 7. 1 - komp.wässrige Bindemittel allein oder in Kombination.

Wässrige Dispersion eines carboxylgruppenhaltigen Copolymeren aus
1,3-Butadien und Styrol, entweder pur oder mit Zusatz an
Wasser und synth. Kieselsäure, gut durchgemischt, ergibt schöne
Struktur, härtet gummiartig elastisch aus, trocknet rasch ab, bleibt etwas klebrig.

In Kombination mit der wässrigen Dispersion eines Copolymers aus 2-Ethylhexylacrylat und Methylmethacrylat, sowie einer wäßrigen Dispersion eines Copolymers aus Butylacrylat und Styrol, lassen sich jeweils sehr stabile und vielseitig anwendbare, rutschhemmende Verbindungen auf den verschiedensten Oberflächen gestalten.

### 7.1.

| | |
|---|---|
| 1,3-Butadien und Styrol | 20,00 Gr |
| Butylacrylat und Styrol | 20,00 |
| Entschäumer | 0,50 |
| Protectosil WS 405 | 1,60 |
| Aerosil 200 9% | 3,60 |
| Wasser 25% | 10,00 |

gut aufzutragen und zu rollen. Gibt feine rutschhemmende Strukturen.Staubtrocken in ca 1 Stunde.

### 7.2.

| | |
|---|---|
| 1,3 Butadien und Styrol | 20,00 |
| 2-Ethylhexylacrylatund Methylmethacrylat | 30,00 |
| Entschäumer | 0,50 |
| Protectosil WS 405 | 2,00 |
| Aerosil 300 15% | 7,50 |
| Wasser 50% | 25,00 |

Es können feine und starke Strukturen gebildet werden.Sehr gut rutschsicher naß und trocken.Barfuß und mit Ledersohlen.

### 7.3

| | |
|---|---|
| Copolymer 2-Ethylhexylacrylat und Methylmethacrylat | 40,00 Gr |
| Protectosil WS 405 | 1,60 |
| Entschäumer | 1,00 |
| Aerosil 300 12% | 4,80 |
| Wasser 40% | 16,00 |

sehr gut zu verarbeiten,sehr gut rutschhemmend tocken und naß, auch mit glatten Ledersohlen.

### 2. Mischungsbeispiele bei Verwendung von synth. Kieselsäure und Aluminium-Oxid

| | |
|---|---|
| Epoxy Bindemittel aus Bis-Phenol A, Epicote 828 XA | 25,00 Gr. |
| Metoxypropylacetat Dowanol PMA | 15,00 |
| Silan A 187 | 1,00 |
| Aerosil R 805 (oder R812/ 10 %) bezogen auf Komp. "A"+ "B" | 3,50 |
| Nano Aluminium Oxid | 1,00 |
| Entschäumer | 0,50 |
| Komponente B aliphat. Amin Epi Cure F 205/ 2,5 : 1 | 10,00 |
| Gesamt | 55,00 Gr. |

Diese Mischung ist sehr leicht aufzutragen, zu verteilen und zu rollen. Bei feinem bis mittleren Auftrag bilden sich sehr feine bis mittlere Strukturen mit sehr guter Rutsch - hemmung und angenehmen Stehvermögen. Bei relativ dickem Auftrag und Rollen dieser Mischung ergeben sich sehr starke und schroffe Strukturen die auf normalem Weg nicht zu reinigen sind und für die es keine nutzvolle Anwendung gibt. Über synth. Kieselsäureanteil und Verdünner sind nun alle Wege zur Veränderung der Mischungen offen.Zum Beispiel bei gleichem Anteil von Komponente "A" zum Verdünneranteil und senken des synth. Kieselsäureanteils auf 8 bis 9 Gew. % ergeben sich feine Strukturen die hoch in die Rutsch - sicherheitsklasse "B"gehen und hygienisch sauber zu reinigen sind. Sehr gut abrieb- und kratzresistent.

### 3. 2-K Verbindung mit synth. Kieselsäure und Nano-Aluminium-Oxid

Komponente "A": Dunaplast, ein UV-stabilisierter, hochwertiger Spezial - Acryllack, transparent oder pigmentiert
Komponente "B": aliphatisches Isocyanat

Sehr guter Halt auf vielen Oberflächen, besonders geeignet für glasfaserverstärkte Polyesterflächen (Schiffe, Boote, Yachten)

**Mischung:**

| | | |
|---|---|---|
| Komponente A | 30,00 Gr | |
| Komp. B 3 : 1 | 10,00 | |
| Verdünner 80 % | 24,00 | |
| Aerosil R 812 (oder R 805 12%) | 4,80 | bezogen aufA+B |
| Nano-Aluminium-Oxid | 2,00 | |
| | 70,80 Gr | gesamt |

Alle Musterplatten sehr gut rutschhemmend bei verschieden starken Aufträgen. Rutschtest auch mit entspanntem Wasser. Sehr gut abrieb- und kratzresistent. Sehr gut zu reinigen.

Gewünschten Anforderungen entsprechend kann das Verhältnis Verdünner zu synth. Kieselsäure beliebig verändert werden. Auch das Nano Aluminum - Oxid kann angepasst werden.

### 4. 2 - komponentige wässerige Epoxy/Klarlackbeschichtung von Huntsman

**Mischung:**

| | |
|---|---|
| Komp. A Araldite GY 776 BD | 20,00 Gr |
| Komp. B Aradur 39 BD | 35,00 |
| Verdünnungswasser | 15,00 |
| Verdünnungswasser | 20,00 |
| Aerosil Qualität 300 bezogen auf A+B 15 % | 8,20 |
| Nano-Aluminium-Oxid | 4,00 |
| Entschäumer | 2,00 |
| Gesamt | 104,20 Gr. |

Musterflächen mit unterschiedlich starkem Auftrag trocknen schnell ab und sind stark rutschhemmend. Auch bei dieser Mischung können A und B - Komponente und Nano-Aluminium-Oxide nach Wunsch und Bedarf zueinander verändert werden.

Sehr gute Abrieb- und Kratzresistenz.

### 5. BASF ACRONAL 620 1-komp. wasserlösliche Acryl - PU Basis (Friocryl)

**Mischung:**

| | |
|---|---|
| Friocryl | 40,00 Gr |
| Aerosil Qualität 300 8% | 3,20 |
| Nano-Aluminium-Oxid | 1,80 |
| Wasser | 10,40 |
| Entschäumer | 0,50 |
| Gesamt | 55,90 Gr |

Musterflächen mit unterschiedlich starkem Auftrag. Strukturen von fein bis mittel. Trocknet sehr rasch ab. Sehr gut rutschhemmend, sehr gut abrieb- und kratzresistent. Auch diese Beschichtung ist in sich veränderbar.

### 6. Sprühbeschichtung von Bodenbelägen

Die Gefahren ausgehend von rutschenden Teppichen, Matten, Vorlegern und dgl. sind beträchtlich. Die jährlichen Informationskampagnen öffentlicher Stellen im Bezug auf den Wohnbereich mit seinen Unfallquellen mit vielen Toten, unzähligen Verletzten ständig steigenden Behandlungs- und Folgekosten, mitverursacht zu einem großen Teil durch rutschende Bodenbeläge, zeigen ein gewaltiges Problem auf.

Was kann man tun um bewegliche Bodenbeläge zu fixieren ? Das Angebot ist nicht groß! Kunststoffgitter unter dem Belag sind eine Hilfe, sie verschieben sich aber auch. Entweder rutscht das Kunststoffgitter mit dem Teppich oder der Teppich schiebt sich über das Gitter hinaus. Ein weiterer Weg ist Teppiche und andere bewegliche Beläge mit Doppelklebebänden am Untergrund zu befestigen. Dies ist nur mit großen Teppichen sinnvoll.

Die Nachteile: Der Teppich läßt sich nicht verschieben. Schmutz und Staub, die durch den Teppich oder andere bewegliche Beläge auf den Boden durchdringen, können nicht entfernt werden. Löst man den Teppich vom Untergrund, so sind die Kleberreste und die beiderseits der Klebebänder auftretenden Streifen mit ausgepresstem Klebstoff, vermischt mit Staub und Schmutz mit normalen Mitteln nicht zu entfernen.

Erfindungsgemäß wird eine Verbindung z.B. eine wässrige Dispersion eines carboxyl - gruppenhaltigen Copolymeren aus 1,3-Butadien und Styrol pur oder anteilig mit Wasser verwendet werden und pyrogenen, roentgenamorphen, hydrophilen, synthetischen Kieselsäuren in Nanoform eingemischt.

Eine gute Standardmischung sieht wie folgt aus:

**Fertige Mischung 1.000 Gramm**

| | |
|---|---|
| "A" Butadien - Styrol Dispersion oder ein gleichwertiges Bindemittel | 650,00 |
| Aerosil 200 oder 300 / 9% von "A" | 58,50 |
| Entschäumer | 2,00 |
| Silan / 3% von "A" | 19,50 |
| Wasser | 270,00 |
| Gesamtmenge in Gramm | 1000,00 |

Die Verwendung dieser Standardmischung bewirkt, dass ein Teppich oder sonstiger beweg - licher Bodenbelag oder eine Schuhsohle, nach angepasster Besprühung und kurzer Abtrocknungszeit am Untergrund nicht anklebt und bei Belastung nicht rutscht. Eine entsprechende Beschiechtung bewirkt ferner, dass der Teppich oder sonstige Belag unter Belastung von Personen, in seiner Fläche, durch bewußte Fußbewegungen, die auf Verschieben abzielen, nicht verschiebbar ist. Der Belag darf dabei keine Falten oder Wellen bilden. Die Beläge sind auch vom Rand her bei Belastung nicht verschiebbar.

Der Teppich oder sonstige Belag ist ohne Belastung voll verschiebbar und haftet nicht am Untergrund. Für Sonderanwendungen können Mischungen beliebig eingestellt werden. Zum Beispiel eine leichte oder mittlere Haftung am Untergrund, so dass der Belag nicht leicht verschoben werden kann.

Das Besprühen sollte jeweils vom Außenrand nach innen vorgenommen werden um Over - spray zu vermeiden. Auf alle Fälle sollte daher entlang der Ränder zumindest Zeitungspapier aufgelegt werden. Kleine Teppiche, Vorleger oder sonstige Beläge sollen vollflächig leicht besprüht werden. Die Ränder umlaufend in einer Mindestbreite von 4 bis 5cm und punktuelle Stellen oder Flächen angepasst entsprechend stärker.

Bei größeren oder großen Teppich- oder sonstigen Belagsflächen den Rand umlaufend in 10 bis 20 cm Breite angepasst entsprechend stark besprühen. Großflächig, auch abhängig von der Stärke des Belages, schwach und punktuell oder auch flächig stärker besprühen. Überdies kann, um die Rutschhemmung zu verstärken, jederzeit nachgesprüht werden. Nach ca. ein - stündiger Trockenzeit bei Raumtemperatur von 20 bis 25 °C kann der Teppich oder sonstige Belag gewendet und seiner Benützung zugeführt werden.

Für den privaten Gebrauch wird die Mischung in Aerosolspraydosen abgefüllt. Das Treibgas ist harmloses Nitrogen. Gewerblich, beispielsweise in Teppichreinigungsbetrieben, kann das Besprühen nach dem Reinigungsvorgang, mit Spritzpistolen vorgenommen werden.

Die beweglichen Bodenbeläge leichter Art können in Handwäsche oder im Schongang bis 30° gewaschen werden.

### 7. Sprühbeschichtung von beweglichen Bodenbelägen oder Schuhsohlen

Mischung speziell für die Besprühung von beweglichen Bodenbelägen oder Schuhsohlen mit Aerosolspraydosen. Für 1.000 Gramm fertige Mischung zur Nettoabfüllung in Aerosolspraydosen zu je 100-400m1 benötigt man:

| | |
|---|---|
| Copolymer aus 1,3-Butadien und Styrol | 730.00 Gr |
| Wasser | 245,00 |
| Aerosil 300 3% zu "A" | 22,00 |
| Entschäumer | 3,00 |

Diese Mischung ist sprühfähig wie Wasser, trocknet schnell, näßt die Beläge weniger und gibt ein ausgezeichnetes Ergebnis.

### 8. Mischungsbeispiele bei Verwendung von synth. Kieselsäure und Granulat

Ein Beispiel aus dem Sanitärbereich: Beschichtung des Stehbereiches einer Badewanne.

| | |
|---|---|
| Verwendetes Bindemittel aus Bis-Phenol A, Epicote 828 XA" | 45,00 |
| Metoxypropylacetat Dowanol PMA | 0,75 |
| Silan A 187 | 1,85 |
| Aerosil R805 | 2,45 |
| Aliphatisches Polyuretharn Kugel-Pigment, im Mittel 45 µm | 15,00 |
| **Gesamt** | **65,05** |
| Komp "B" aliphatisches Amin "Epi Cure F 205" | 20,00 |
| **Gesamt** | **85,05** |

Diese Mischung wird hauptsächlich nur für die Beschichtung von Badewannen, Duschtassen und Badezimmerfliesen verwendet.

Die gereinigte Badewanne wird mit Heißluft (Föhn) nachgetrocknet. Der Stehteil der Wanne mit Klebeband rundherum abgegrenzt. Zu der in einem vorgepacktem Plastikbecher befindlichen Komponente "A" wird die in einem Plastikpölsterchen befindliche Kompomonente "B" gegeben. Die beiden Komponenten werden gründlichst zu einen glatten "Teig" verrührt, auf den eingegrenzten Teil der Wanne verteilt, mit der Zahnspachtel möglichst gleichmäßig aufgetragen und mit der Schaumstoffrolle mit mäßigem Druck gerollt. Am besten kreuz und quer, denn durch die Art des Rollens kann auch die Struktur beeinflusst werden. Der Sitzteil der Badewanne ist eine empfindliche Stelle, auf Wunsch wird dort die Beschichtung dünner aufgetragen, so dass sich nach dem Rollen eine feine Struktur ergibt. Gleich nach dem Rollen die Klebebänder abziehen. Topfzeit 30 Minuten. Bei Zimmertemperatur von 20-25° rechnet man mit 12 Stunden Trockenzeit. Es ist jedoch besser, mit der Benützung 24 Stunden zu warten.

Die Beschichtung gibt ein angenehmes Stehgefühl, sie ist glasklar transparent, bei Lichteinfall glänzen die Erhebungen wie Diamanten. Sie ist beständig gegen Säuren, Chemikalien, sogar beständig gegen Hydrochlorid. Sie alkalifest und wasserfest.

Beste Haftung ist auch auf einer Reihe von anderen Oberflächen gegeben. Gegebenenfalls ist ein Voranstrich als Zwischenschicht angebracht.

Der Stehbereich einer Normalbadewanne beträgt 0,3 - 0,35 m² und der benötigte Materialaufwand aus Komponente A + B 85g. Für einen m² beträgt der Materialaufwand 255 g und pro kg Material können ca 4 m² beschichtet werden.

Die erfindungsgemäße Beschichtung gibt im Vergleich zu Bekanntem eine bedeutend bessere Rutschhemmung auf glatten Oberflächen, welche insbesondere auch durch die Möglichkeiten des Auftrages, gesteuert werden kann. Der Abrieb der erfindungsgemäßen Zusammensetzung ist geringer, wodurch sich die Nutzungsdauer deutlich verlängert. Darüber hinaus ist die Reinigung einfacher und gründlicher.

Bei einem Reinigungstest wurden eine mit Epoxyharz in mittlerer Struktur nach dem erfindungsgemäßen Verfahren beschichtete Fliese und eine Fliese beschichtet mit 1 - Komponenten wässerigem Acryl-PU Bindemittel und 20% aromatischen PU-Kugelpigmenten, 7- 600µ vermischt, nach voller Aushärtung zum Teil mit schwarzer Schuhcreme bestrichen und nach Trocknung einer Reinigung unterzogen. Die Fliese mit Epoxybeschichtung wurde unter fließendem Wasser mit einem leichten Schwamm abgerieben und behielt eben leichten Grauschleier, der sich leicht mit einem Haushalts-Essigreiniger entfernen ließ. Unter den gleichen Bedingungen verblieben auf der Acryl-PU Fliese noch 15-20% der Schuhpaste. Nach Behandlung mit Essigreiniger verblieb noch ein starker Schleier der erst mit einem extrem starken Sonderreiniger entfernt werden konnte, wobei auch Granulatkörner aus dem Bindemittel losgelöst wurden.

Weitere vielseitig einsetzbare Bindemittel sind auf Basis Urethan Dispersionen möglich. Sie sind 1-komponentig wasserlöslich, transparent und farbig im Innen- und Außenbereich anwendbar. Sie sind auf den verschiedensten Oberflächen anwendbar. Sie sind diffusionsoffen und sehr abriebfest. Sie werden in einem ähnlichen Mischungsverhältnis wie die Epoxy-Variante aufgebaut. Als Zusatz können alle oben angeführten Kugelpigmente, TPU-Elastomere und Gummigranulat eingesetzt werden. Das Höhenstruktur gebende Mittel ist in diesem Fall das Aerosil 300 in einer Zugabe von 3 - 6 Gew. % per Mischungseinheit.

## Patentansprüche

1. Zusammensetzung zum Aufbringen einer rutschhemmenden, sich in die Höhe aufbauenden Beschichtung auf glatten Flächen - jedoch nicht auf Papier oder Kartonagen-, bestehend aus einem Bindemittel, einem Verdünner und einem Zusatz von durch Flammenhydrolyse aus Chlorsilanen hergestellter, extrem feinteiliger synthetischer Kieselsäure mit einer mittleren Größe der Primärteilchen von 2-10 nm, 5-25 nm, 12-30 nm, 20-35 nm, 30-45 nm und/ oder 40-60 nm, wobei die sich in die Höhe aufbauende Struktur durch den Zusatz von Kieselsäure in einer Konzentration von 2-30% erzeugt wird.

2. Zusammensetzung nach Anspruch 1 **dadurch gekennzeichnet, dass** für 1- und 2-komponentige wasserlösliche Bindemittel hydrophile Kieselsäure verwendet wird.

3. Zusammensetzung nach Anspruch 1 **dadurch gekennzeichnet, dass** für lösungsmittelgebundene Bindemittel hydrophobe Kieselsäure verwendet wird.

4. Zusammensetzung gemäß einem der Ansprüche 1 bis 3 enthaltent zusätzlich Teilchen eines synthetischen oder organischen Materials **dadurch gekennzeichnet, dass** die Teilchen aus synthetischem oder organischem Material nicht größer als 75 µm sind, und die Kieselsäure in einer Konzentration von 2-30 Gew. % zugesetzt wird.

5. Zusammensetzung nach Anspruch 4 **dadurch gekennzeichnet, dass** die für die Anwendung verwendeten Teilchen aus synthetischem Material aus der Gruppe bestehend aus aliphatischen Polyurethanen, aromatischem Polyurethan/Polyurea Copolymer oder Polyacryl, TPU-Elastomeren, granuliert aus Pellets einer Typreihe S bis 90 Shore und/oder farbigen oder naturfarbenen Gummigranulaten ausgewählt sind.

6. Zusammensetzung gemäß einem der Ansprüche 1 bis 3, wobei die Zusammensetzung zusätzlich Metall-Oxid, insbesondere Aluminium-Oxid mit mittlerer Partikelgröße von unter 100 nm, bevorzugt unter 40 nm enthält und die Zusammensetzung nach Auftrag auf eine glatte Fläche zu einer Beschichtung mit einer Oberflächenabdeckung von ca. 100-265 g/m² führt.

7. Verfahren zum Aufbringen einer rutschhemmenden, sich in die Höhe aufbauenden Beschichtung **dadurch gekennzeichnet, dass** die Zusammensetzung gemäß einem der Ansprüche 1 bis 6 auf eine glatte Fläche aufgetragen und/oder aufgesprüht wird.

8. Verwendung von synthetischer Kieselsäure in einer Zusammensetzung zum Aufbringen oder Aufsprühen um glatte Flächen - jedoch nicht auf Papier oder Kartonagen - mit einer rutschhemmenden, sich in die Höhe aufbauenden Beschichtung zu versehen, wobei die Zusammensetzung aus einem Bindemittel, einem Verdünner und einem Zusatz von durch Flammenhydrolyse aus Chlorsilanen hergestellter, extrem feinteiliger synthetischer Kieselsäure mit einer mittleren Größe der Primärteilchen von 2-10 nm, 5-25 nm, 12-30 nm, 20-35 nm, 30-45 nm und/oder 40-60 nm besteht.

9. Verwendung nach Anspruch 8 wobei die Zusammensetzung gemäß einem der Ansprüche 1 bis 6 verwendet wird.

10. Endprodukt, welches eine rutschhemmende, sich in die Höhe aufbauenden Beschichtung, bestehend aus der Zusammensetzung gemäß einem der Ansprüche 1 bis 6, umfasst.
